# EUROPÄISCHE PATENTSCHRIFT

(11) **EP 1 642 770 B1**
(45) Veröffentlichungstag und Bekanntmachung des Hinweises auf die Patenterteilung: **07.01.2009**
(21) Anmeldenummer: 05107496.1
(22) Anmeldetag: 16.08.2005
(51) Int. Cl.: B60R 1/00, H04N 7/18, G08G 1/16

(54) **Verfahren zur Lenkung der Aufmerksamkeit eines Fahrers eines Fahrzeugs auf Objekte in einem Bild**
Method for directing a vehicle driver's attention to objects in an image
Procédé pour appeler l'attention d'un conducteur d'un véhicule sur des objets dans une image

(30) Priorität: 30.09.2004 DE 102004047475
(43) Veröffentlichungstag der Anmeldung: 05.04.2006
(73) Patentinhaber: ROBERT BOSCH GMBH, 70442 Stuttgart (DE)
(72) Erfinder: Schick, Jens, 71083 Herrenberg (DE); Muehlmann, Karsten, 70499 Stuttgart (DE); Wuerz-Wessel, Alexander, 70599 Stuttgart (DE)

(56) Entgegenhaltungen:
- EP-A- 1 407 931
- EP-A2- 1 037 189
- DE-A1- 19 940 723
- US-A1- 2001 040 534

## Beschreibung

Die Erfindung betrifft ein Verfahren zur Lenkung der Aufmerksamkeit eines Fahrers eines Fahrzeugs auf Objekte in einem Bild, das von einer Videokamera aufgenommen wird.

Zur Verbesserung der Sicht in einem Kraftfahrzeug sind Vorrichtungen mit Videokameras bekannt geworden - häufig auch Bildsensoren oder auch Bildsensorsysteme genannt -, die ein Bild des Raums vor dem Fahrzeug aufnehmen und auf einem Bildschirm darstellen. So ist beispielsweise in DE 102 53 510 A1 eine Vorrichtung und ein Verfahren zur Verbesserung der Sicht in einem Kraftfahrzeug mit einem infrarotempfindlichen Bildsensorsystem beschrieben.

Es ist ferner bekannt, in Bilder, die in Fahrzeugen auf einem Bildschirm wiedergegeben werden, Warnsignale einzublenden, beispielsweise wenn sich das Fahrzeug einer Kreuzung nähert. Eine solche Anordnung ist beispielsweise in US 2001/0040534 A1 beschrieben. Aus US 6,720,938 B2 ist ferner ein Head-up-Display bekannt geworden, bei dem die Helligkeit des wiedergegebenen Bildes durch ein Steuersignal im Sinne eines Warnsignals heller gestellt wird.

Aus der Europäischen Patentanmeldung EP 1 407 931 A1 ist ein Verfahren und ein System zur Unterstützung des Fahrers eines Fahrzeuges bekannt, wobei die von einer Kamera erfassten Gefährdungsobjekte auf einer Anzeigeeinrichtung augenfälliger darstellt werden, als diejenigen Objekte, die keine Gefährdung darstellen.

### Vorteile der Erfindung

Aufgabe der vorliegenden Erfmdung ist es, die Aufmerksamkeit eines Fahrers auf bestimmte Objekte in dem Bild zu richten. Diese Aufgabe wird bei dem erfindungsgemäßen Verfahren dadurch gelöst, dass im Gesichtsfeld der Videokamera vorhandene Objekte daraufhin geprüft werden, ob sie für eine zu erwartende Bewegung des Fahrzeugs relevant sind, dadurch gekennzeichnet, daß ein Freiraum für eine weitere Bewegung des Fahrzeugs hervorgehoben dargestellt wird, bei welcher die zunächst als relevant erkannten Objekte nicht relevant sind.

Zur Durchführung des erfindungsgemäßen Verfahrens kann die Videokamera verschieden ausgerichtet sein. Bei den meisten Anwendungen kommt hauptsächlich eine Ausrichtung in Fahrtrichtung in Frage. Eine Blickrichtung nach hinten oder - durch Einbau am oder in der Nähe eines Rückspiegels - zur Erfassung des so genannten toten Winkels ist ebenfalls möglich.

Um die Aufmerksamkeit direkt auf Objekte zu richten, die möglicherweise eine Gefährdung darstellen, ist bei einer ersten Ausführungsform der Erfindung vorgesehen, dass Bildbestandteile, die als relevant erkannte Objekte enthalten, hervorgehoben dargestellt werden. Diese Ausführungsform ist beispielsweise vorteilhaft, wenn sich ein Fußgänger oder ein anderes Fahrzeug der vor dem eigenen Fahrzeug liegenden Fahrbahn nähert, wenn ein vorausfahrendes Fahrzeug bremst oder wenn sich das eigene Fahrzeug einem stehenden Hindernis nähert.

Die hervorgehobene Darstellung kann auf verschiedene Weise erfolgen, beispielsweise dadurch, dass die Bildbestandteile erhellt oder mit veränderten Farben dargestellt werden. Damit die als relevant erkannten Objekte für den Fahrer noch als solche erkennbar bleiben, ist bei einer vorteilhaften Ausgestaltung vorgesehen, dass die Bildbestandteile durch jeweils eine mindestens ein relevantes Objekt einschließende runde Fläche hervorgehoben werden. Dadurch wird bei einer Aufhellung der Bildbestandteile der Eindruck erweckt, dass ein Scheinwerfer auf das relevante Objekt gerichtet ist.

Bei der erfindungsgemäßen Ausführungsform werden Erkenntnisse berücksichtigt, wonach ein Fahrer unwillkürlich zunächst auf Objekte lenkt, die plötzlich hervorgehoben werden, bevor er eine Gefährdung erkennt. Vorzugsweise werden auch andere Objekte dadurch berücksichtigt, dass bei der Berechnung des Freiraums auch Objekte berücksichtigt werden, die für die zu erwartende Bewegung nicht relevant sind.

Der Hinweis auf den Freiraum kann bei dieser Ausführungsform insbesondere dadurch erfolgen, dass der Freiraum durch eine hervorgehobene Wiedergabe der Fahrbahn oder durch richtungsweisende Symbole dargestellt wird.

Was bei dem erfmdungsgemäßen Verfahren als zu erwartende Bewegung des Fahrzeugs angenommen wird, hängt - abgesehen von der Ausführung des Verfahrens im Einzelnen - auch von der jeweiligen Verkehrssituation ab. Ohne das Vorliegen besonderer Umstände kann die zu erwartende Bewegung eine Geradeausfahrt oder eine Kurvenfahrt sein, je nach Stellung der Lenkung. In die zu erwartende Bewegung können auch Lenkbewegungen einfließen, beispielsweise unwillkürliche, so dass die zu erwartende Bewegung nicht nur eine Linie, sondern einen Streifen darstellt.

In die zu erwartende Bewegung können auch im Sinne einer künstlichen Intelligenz Erfahrungen einfließen, beispielsweise dass ein Fahrer, der auf einem Fahrstreifen einer Autobahn auf ein vor ihm fahrendes langsameres Fahrzeug trifft, einen Spurwechsel beabsichtigt. Wenn dann bei einer im Rückspiegel angeordneten Videokamera ein auf einem parallelen Fahrstreifen überholendes Fahrzeug erkannt wird und der beabsichtigte Spurwechsel eine zu erwartende Bewegung ist, kann dem Fahrer durch eine hervorgehobene Darstellung des eigenen Fahrstreifens signalisiert werden, auf diesem Fahrstreifen zu bleiben.

Die Gewinnung von Informationen über die im Raum vor dem Fahrzeug befmdlichen Objekte kann bei dem erfmdungsgemäßen Verfahren in verschiedener Weise erfolgen, wobei die Videokamera selbst als Sensor dienen kann. Je nach Voraussetzungen im Einzelnen können jedoch auch andere Sensoren, beispielsweise Radar, Lidar oder Ultraschallsensoren, verwendet werden. Sofern der dafür vorgesehene Sensor eine Abbildung des Raumes liefert, kann gemäß einer Weiterbildung des erfindungsgemäßen Verfahrens vorgesehen sein, dass die zur Prüfung der vor dem Fahrzeug befmdlichen Objekte erforderlichen Informationen zunächst durch eine Abbildung des Raumes und durch Anwendung von Bildverarbeitungsalgorithmen ermittelt werden und dass aus den ermittelten Objekten aufgrund ihres Ortes und ihrer Geschwindigkeit in Bezug auf das Fahrzeug relevante Objekte selektiert werden. Für das erfmdungsgemäße Verfahren anwendbare Bildverarbeitungsalgorithmen stehen dem Fachmann in vielfältigen Ausführungen zur Verfügung. Beispielsweise durch Kantendetektion, Bildfluss, Ermittlung von Flächen gleicher Helligkeit können Objekte erkannt und in ihren wesentlichen Umrissen beschrieben werden.

Als Objekte werden im vorliegenden Zusammenhang diejenigen Objekte angesehen, die im Raum vor dem Fahrzeug vorhanden sind und bei der Lenkung des Fahrzeugs in irgendeiner Weise berücksichtigt werden müssen, beispielsweise andere Fahrzeuge, Fußgänger, Bäume, Bordsteine, Häuser, Verkehrsschilder und Leitplanken. Sofern es aus dem Zusammenhang eindeutig hervorgeht, werden mit Objekt sowohl das reale Objekt vor dem Fahrzeug, das Bild eines Objekts auf dem Bildschirm oder im Speicher oder eine Beschreibung des Objekts bezeichnet.

Bei der Ermittlung von Objekten mit Hilfe von Bildverarbeitungsalgorithmen werden häufig mehrere Algorithmen und/oder Informationen mehrerer Sensoren parallel angewandt, um die Treffsicherheit zu erhöhen. Für diesen Fall kann bei dieser Weiterbildung vorgesehen sein, dass nach einer durch die Bildverarbeitungsalgorithmen erhaltenen Hypothese durch Vergleich mit in einer Datenbank gespeicherten Objekten die Hypothese verifiziert wird.

Gegenüber Bildaufnahmeverfahren liefern andere Verfahren, beispielsweise Radar oder Lidar, bereits Informationen über den Abstand und die Richtung von reflektierenden Gegenständen. Bei einer anderen Weiterbildung des erfindungsgemäßen Verfahrens ist deshalb vorgesehen, dass die zur Prüfung der vor dem Fahrzeug befindlichen Objekte erforderlichen Informationen durch ein mindestens den Abstand und die Richtung reflektierender Gegenstände erfassendes Abtastverfahren ermittelt werden und dass die dadurch ermittelten Objekte aufgrund ihres Ortes und ihrer Geschwindigkeit bezüglich des Fahrzeugs selektiert werden, um relevante Objekte zu erhalten.

Aus der Menge der ermittelten Objekte werden bei dem erfindungsgemäßen Verfahren diejenigen selektiert, welche die Aufmerksamkeit des Fahrers erregen sollen. Dieses geschieht vorzugsweise dadurch, dass ein Objekt als relevantes Objekt selektiert wird, wenn der Ort, die Richtung und die Geschwindigkeit des Objekts und des Fahrzeugs eine Kollision möglich erscheinen lassen. Dabei können beispielsweise Objekte selektiert werden, die auf Kollisionskurs liegen oder Objekte, die zwar aufgrund ihrer momentanen Geschwindigkeit und ihres momentanen Ortes im Verhältnis zum eigenen Fahrzeug zwar noch keine Kollisionsgefahr darstellen, jedoch durch Änderung ihrer Geschwindigkeit oder ihrer Bewegungsrichtung zu einer Kollision führen können, beispielsweise ein dicht voraus fahrendes Fahrzeug, das bremsen könnte.

Das erfmdungsgemäße Verfahren ist nicht auf Objekte, die ein Kollisionsrisiko darstellen, beschränkt. So ist bei einer anderen Weiterbildung vorgesehen, dass ein Objekt, das sich durch seine Form und/oder Farbe auszeichnet, als relevant selektiert wird. Das Objekt kann beispielsweise ein Verkehrszeichen sein, das im Sinne der ersten Ausführungsform hervorgehoben dargestellt wird, oder eine Fahrbahnmarkierung. Bei drohendem Verlassen des Fahrstreifens kann die Fahrbahnmarkierung oder im Sinne der zweiten Ausführungsform der Fahrstreifen, auf dem sich das eigene Fahrzeug (noch) befindet, hervorgehoben dargestellt werden.

Möglicherweise können nicht alle Informationen zur Durchführung des erfindungsgemäßen Verfahrens von einem Sensor bereit gestellt werden. Deshalb ist bei einer anderen Weiterbildung des erfindungsgemäßen Verfahrens vorgesehen, dass Informationen von mehreren Sensoren zur Ermittlung von relevanten Objekten verwendet werden.

### Zeichnung

Ausführungsbeispiele der Erfindung sind in der Zeichnung anhand mehrerer Figuren dargestellt und in der nachfolgenden Beschreibung näher erläutert. Es zeigt:
Fig. 1 eine schematische Darstellung einer Einrichtung zur Durchführung des erfindungsgemäßen Verfahrens,
Fig. 2 ein weiteres Ausführungsbeispiel einer Einrichtung, bei welcher die Signale der Videokamera für die Prüfung der Objekte verwendet werden,
Fig. 3 ein Ausführungsbeispiel mit einem separaten Sensor,
Fig. 4 eine Darstellung vieler Verfahren zum Ermitteln und Selektieren von Objekten und
Fig. 5 bis Fig. 9 Schirmbilder zur Erläuterung des erfindungsgemäßen Verfahrens.

### Beschreibung der Ausführungsbeispiele

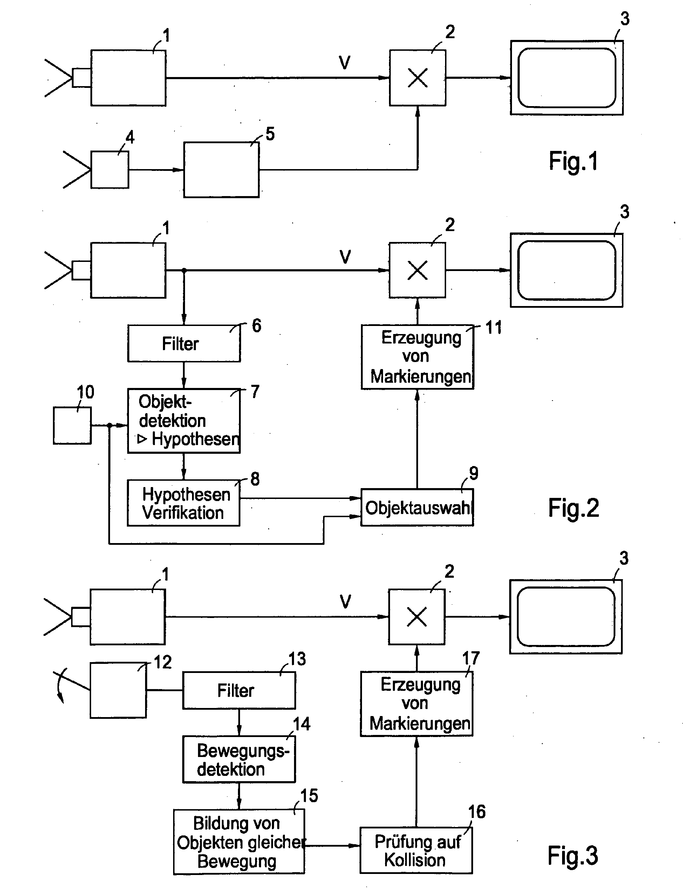

Bei der Einrichtung nach Fig. 1 ist eine Videokamera in nicht dargestellter Weise auf den Raum vor dem Fahrzeug gerichtet, wobei sie nicht nur in Fahrtrichtung vor dem Fahrzeug, sondern auch seitlich vor dem Fahrzeug liegende Objekte aufnimmt. Die aufgenommenen Bilder werden auf einem Bildschirm 3 dargestellt. Ein weiterer Sensor 4 erfasst ebenfalls den vor dem Fahrzeug liegenden Raum. Die Signale dieses Sensors werden über eine Bildverarbeitungseinrichtung 5 gemeinsam mit den Signalen V der Videokamera 1 einer Mischeinrichtung 2 zugefiihrt. Der Anschaulichkeit halber sind die Einrichtungen in den Figuren 1 bis 3 als Blockschaltbilder dargestellt, wodurch nicht festgelegt wird, ob und wie weit die Ausführungsbeispiele als Hardware-Schaltungen oder als Programme verwirklicht werden. So kann beispielsweise auch die Mischeinrichtung 2 durchaus von einem Rechner mit einem entsprechenden Programm gebildet werden.

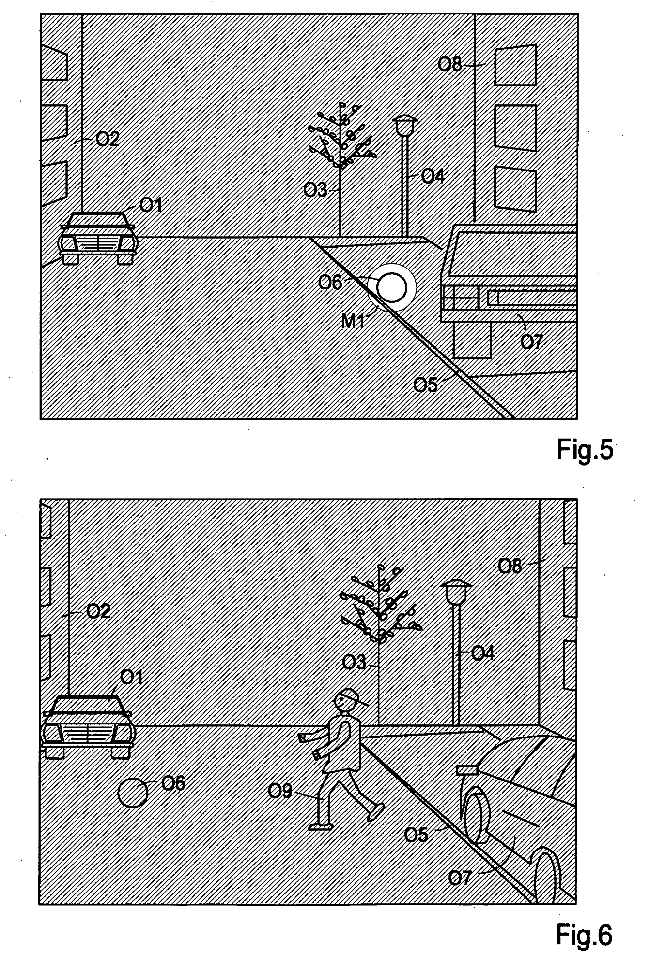

Bei der in Fig. 2 dargestellten Einrichtung werden sowohl für die Darstellung auf dem Bildschirm 3 als auch für die Ermittlung von relevanten Objekten die Signale der Videokamera 1 verwendet, die zunächst in einem Filter 6 von störenden Anteilen, beispielsweise Rauschen, befreit werden. Anschließend erfolgt bei 7 eine Objektdetektion, die zu Objekthypothesen führt, welche bei 8 verifiziert werden. Damit stehen beispielsweise die in Fig. 5 mit O1 bis 08 bezeichneten Objekte zur Verfügung. Bei der Ermittlung der Objekte im Verfahrensschritt 7 sowie bei der folgenden Objektauswahl bei 9 werden unter anderem die relative Lage der Objekte zum Fahrzeug und deren relative Geschwindigkeit in Bezug auf das Fahrzeug berücksichtigt. Dazu werden von geeigneten Sensoren 10 des Fahrzeugs entsprechende Daten zugeführt.

Bei 9 werden von den Objekten O1 bis On diejenigen ausgewählt, die aufgrund ihres Ortes und ihrer Bewegung eine Kollision mit dem Fahrzeug vermuten oder nicht ausschließen lassen. Aus diesen Objekten werden bei 11 Markierungen erzeugt. Dies sind Flächen, insbesondere Kreise und Ellipsen, welche die selektierten Objekte enthalten. Derartige Flächen können beispielsweise durch Ermittlung des Mittelpunktes und der Extrema der ausgewählten Objekte berechnet werden. Diese werden in der Mischeinrichtung 2 den Videosignalen derart überlagert, dass die Bildbestandteile, welche selektierte Objekte enthalten, erhellt oder mit veränderten Farben dargestellt werden. Bei der Darstellung in Fig. 5 ist ein auf die Straße rollender Ball ein relevantes und damit selektiertes Objekt 06. Die zugehörige Markierung ist eine den Ball einschließende Kreisscheibe M1, die im Gegensatz zu den nicht aufgehellten Bestandteilen in der Zeichnung nicht schraffiert dargestellt ist.

Bei dem Ausführungsbeispiel nach Fig. 3 wird für die Ermittlung der relevanten Objekte ein Radarsensor 12 verwendet, dessen Signale bei 13 gefiltert werden. Die im Erfassungbereich liegenden Gegenstände, welche Radarwellen reflektieren, werden bei 14 daraufhin überprüft, in welche Richtung sie sich bewegen. Bei 14 werden zusammenhängende Flächen gleicher Bewegung jeweils zu Objekten zusammengefasst, die bei 16 auf Kollision überprüft werden. Schließlich werden bei 17 die bereits im Zusammenhang mit Fig. 2 erläuterten Markierungen erzeugt, die bei 2 den Videosignalen V zugemischt werden.

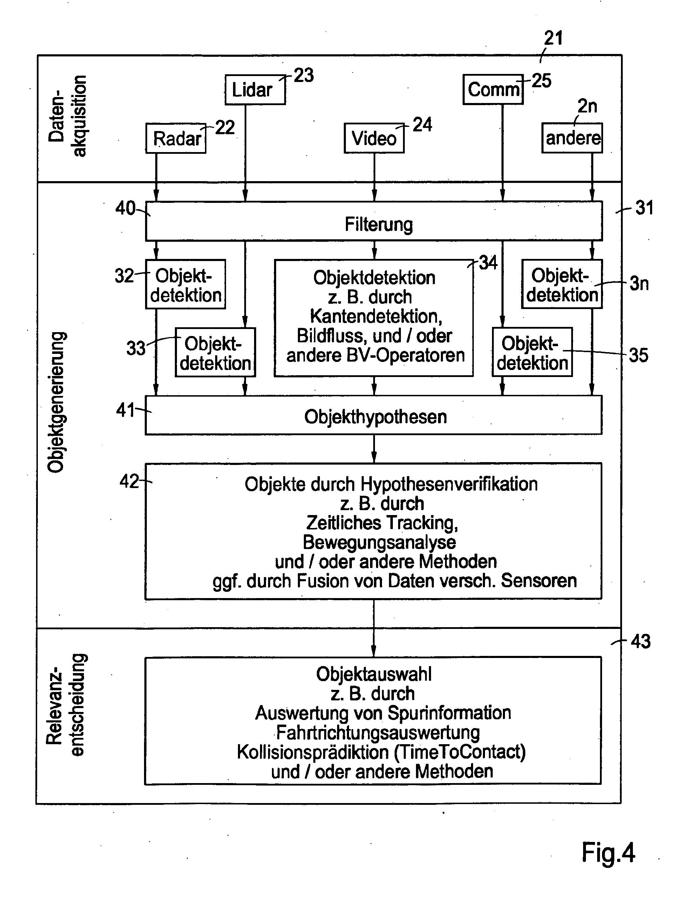

Während die Ausführungsbeispiele nach den Figuren 2 und 3 ausgewählte Sensoren und Verfahrensschritte beinhalten, zeigt Fig. 4 eine Übersicht über eine größere Zahl von Sensoren und Verarbeitungsschritten, die je nach Bedarf bei dem erfindungsgemäßen Verfahren angewendet werden können. In einem ersten Abschnitt 21 erfolgt die Datenakquisition durch verschiedene Sensoren 22 bis 2n, worauf in einem zweiten Abschnitt 31 eine Objektgenerierung erfolgt, die mit einer Filterung 40 beginnt, an die sich jeweils eine an den jeweiligen Sensor angepasste Objektdetektion 32 bis 3n anschließt. Dadurch entstehen Objekthypothesen 41, worauf bei 42 Objekte durch Hypothesenverifikation generiert werden, beispielsweise durch zeitliches Tracking, Bewegungsanalysen und/oder andere Methoden einschließlich der Fusion von Daten verschiedener Sensoren.

In einem dritten Abschnitt 43 erfolgt eine Entscheidung, ob die im zweiten Abschnitt 31 ermittelten Objekte relevant sind. Eine Auswahl von Objekten kann beispielsweise durch Auswertung von Spurinformationen und/oder der Fahrtrichtung erfolgen. In vielen Fällen wird eine Kollisionsprädiktion ein wichtiges Auswahlkriterium. Andere Methoden, die beispielsweise die Wahrscheinlichkeit des Verhaltens der anderen Verkehrsteilnehmer und des eigenen Fahrzeugs berücksichtigen, sind ebenfalls anwendbar.

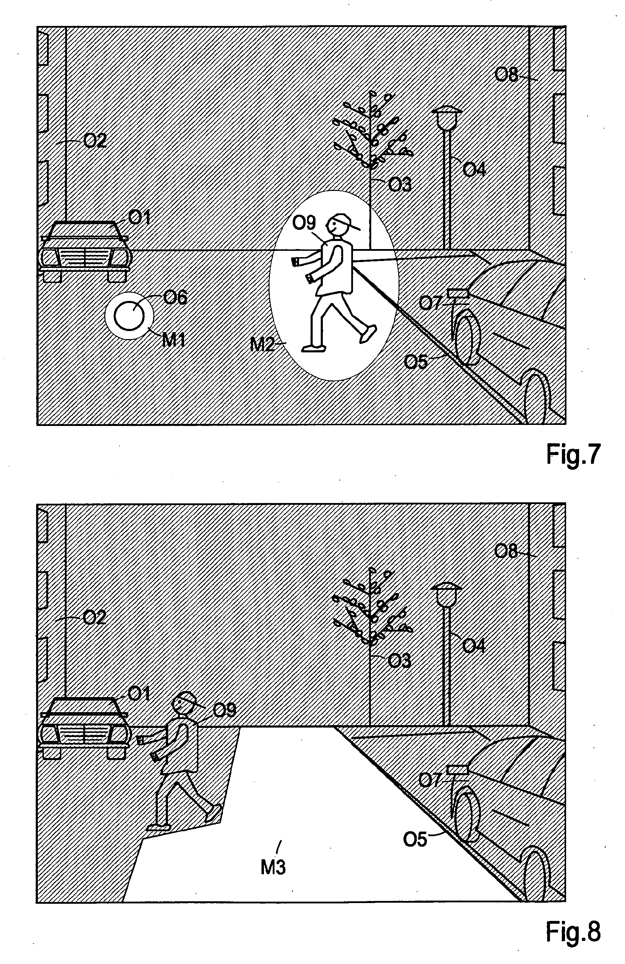

Auf Fig. 5 wurde bereits hingewiesen. Zum Vergleich zeigt Fig. 6 ein Schirmbild ohne eine Markierung relevanter Objekte, während in Fig. 7 ein dem Ball 06 folgendes Kind 09 ebenfalls mit einer Markierung M2 versehen ist.

Fig. 8 zeigt eine Situation, bei welcher das Kind O9 bereits die Fahrbahn überquert hat. Um den Fahrer nicht unnötig durch das nicht mehr gefährdete Kind abzulenken, wird in dieser Situation die für die weitere Fahrt freie rechte Fahrbahnhälfte mit einer Markierung M3 versehen.

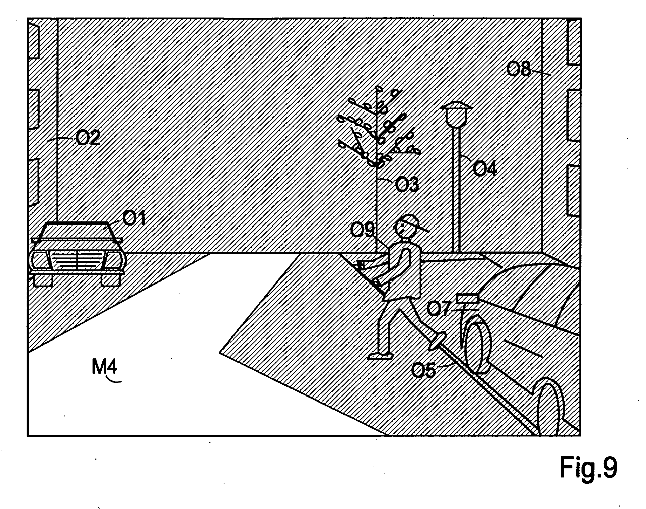

Fig. 9 zeigt ein Beispiel dafür, dass ein relevantes sich bewegendes Objekt, nämlich das Kind O9, bezüglich seines Ortes und seiner möglichen Geschwindigkeit umfahren werden kann, was dem Fahrer durch eine Markierung M4 angezeigt wird. Diese Markierung berücksichtigt auch das Objekt O1, nämlich ein auf der anderen Straßenseite stehendes Fahrzeug. In diesem Zusammenhang wird noch darauf hingewiesen, dass die Schritte des erfindungsgemäßen Verfahrens laufend wiederholt werden, so dass immer die jeweils im Gesichtsfeld der Kamera vorhandenen Objekte daraufhin geprüft werden, ob sie für eine dann zu erwartende Bewegung des Fahrzeugs relevant sind.

## Patentansprüche

1. Verfahren zur Lenkung der Aufmerksamkeit eines Fahrers eines Fahrzeugs auf Objekte (O1 bis O9) in einem Bild, das von einer Videokamera (1) aufgenommen wird, wobei im Gesichtsfeld der Videokamera (1) vorhandene Objekte (O1 bis O9) daraufhin geprüft werden, ob sie für eine zu erwartende Bewegung des Fahrzeugs relevant sind, **dadurch gekennzeichnet, dass** ein Freiraum (M3, M4) für eine weitere Bewegung des Fahrzeugs hervorgehoben dargestellt wird, bei welcher die zunächst als relevant erkannten Objekte (O1 bis O9) nicht relevant sind.

2. Verfahren nach Anspruch 1, **dadurch gekennzeichnet, dass** Bildbestandteile, die als relevant erkannte Objekte (O1 bis O9) enthalten, hervorgehoben dargestellt werden.

3. Verfahren nach Anspruch 2, **dadurch gekennzeichnet, dass** die Bildbestandteile erhellt dargestellt werden.

4. Verfahren nach Anspruch 2, **dadurch gekennzeichnet, dass** die Bildbestandteile mit veränderten Farben dargestellt werden.

5. Verfahren nach einem der vorhergehenden Ansprüche, **dadurch gekennzeichnet, dass** die Bildbestandteile durch jeweils eine mindestens ein relevantes Objekt (O1 bis O9) einschließende Fläche (M1, M2) hervorgehoben werden.

6. Verfahren nach Anspruch 1, **dadurch gekennzeichnet, dass** bei der Berechnung des Freiraums (M3, M4) auch Objekte (O1 bis O9) berücksichtigt werden, die für die zu erwartende Bewegung nicht relevant sind.

7. Verfahren nach einem der Ansprüche 1 oder 6, **dadurch gekennzeichnet, dass** der Freiraum (M3, M4) durch eine hervorgehobene Wiedergabe der Fahrbahn dargestellt wird.

8. Verfahren nach einem der Ansprüche 1 oder 6, **dadurch gekennzeichnet, dass** der Freiraum (M3, M4) durch richtungsweisende Symbole dargestellt wird.

9. Verfahren nach einem der vorhergehenden Ansprüche, **dadurch gekennzeichnet, dass** die zur Prüfung der vor dem Fahrzeug befindlichen Objekte (O1 bis O9) erforderlichen Informationen zunächst durch eine Abbildung des Raumes und durch Anwendung von Bildverarbeitungsalgorithmen ermittelt werden und dass aus den ermittelten Objekten (O1 bis O9) aufgrund ihres Ortes und ihrer Geschwindigkeit in Bezug auf das Fahrzeug relevante Objekte (O1 bis O9) selektiert werden.

10. Verfahren nach Anspruch 9, **dadurch gekennzeichnet, dass** nach einer durch die Bildverarbeitungsalgorithmen erhaltenen Hypothese durch Vergleich mit in einer Datenbank gespeicherten Objekten die Hypothese verifiziert wird.

11. Verfahren nach einem der Ansprüche 1 bis 8, **dadurch gekennzeichnet, dass** die zur Prüfung der vor dem Fahrzeug befindlichen Objekte (O1 bis O9) erforderlichen Informationen durch ein mindestens den Abstand und die Richtung reflektierender Gegenstände erfassendes Abtastverfahren ermittelt werden, und dass die **dadurch** ermittelten Objekte (O1 bis O9) aufgrund ihres Ortes und ihrer Geschwindigkeit bezüglich des Fahrzeugs selektiert werden, um relevante Objekte zu erhalten.

12. Verfahren nach einem der vorhergehenden Ansprüche, **dadurch gekennzeichnet, dass** ein Objekt (O1 bis O9) als relevantes Objekt selektiert wird, wenn der Ort, die Richtung und die Geschwindigkeit des Objekts (O1 bis O9) und des Fahrzeugs eine Kollision möglich erscheinen lassen.

13. Verfahren nach einem der vorhergehenden Ansprüche, **dadurch gekennzeichnet, dass** ein Objekt (O1 bis O9), das sich durch seine Form und/oder Farbe auszeichnet, als relevant selektiert wird.

14. Verfahren nach einem der vorhergehenden Ansprüche, **dadurch gekennzeichnet, dass** Informationen von mehreren Sensoren zur Ermittlung von relevanten Objekten (O1 bis O9) verwendet werden.

## Claims

1. Method for directing a vehicle driver's attention to objects (O1 to O9) in an image which is taken by a video camera (1), wherein objects (O1 to O9) which are present in the field of vision of the video camera (1) are checked to determine whether they are relevant to an anticipated movement of the vehicle, **characterized in that** a free space (M3, M4) for a further movement of the vehicle during which the objects (O1 to O9) which were initially detected as relevant are irrelevant is represented in a highlighted fashion.

2. Method according to Claim 1, **characterized in that** components of the image which contain objects (O1 to 09) which are detected as relevant are represented in a highlighted fashion.

3. Method according to Claim 2, **characterized in that** the components of the image are represented in a brighter fashion.

4. Method according to Claim 2, **characterized in that** the components of the image are represented with changed colours.

5. Method according to one of the preceding claims, **characterized in that** the components of the image are highlighted by, in each case, a surface (M1, M2) which includes at least one relevant object (O1 to O9).

6. Method according to Claim 1, **characterized in that** objects (O1 to O9) which are irrelevant for the anticipated movement are also taken into account in the calculation of the free space (M3, M4).

7. Method according to one of Claims 1 or 6, **characterized in that** the free space (M3, M4) is represented by a highlighted representation of the carriageway.

8. Method according to one of Claims 1 or 6, **characterized in that** the free space (M3, M4) is represented by direction-indicating symbols.

9. Method according to one of the preceding claims, **characterized in that** the information required to check the objects (O1 to O9) located in front of the vehicle is firstly determined by displaying the space and by applying image processing algorithms, and **in that** objects (O1 to O9) which are relevant are selected from the determined objects (O1 to O9) on the basis of their location and their velocity with respect to the vehicle.

10. Method according to Claim 9, **characterized in that** according to a hypothesis which is obtained by means of the image processing algorithms, the hypothesis is verified by comparison with objects stored in a database.

11. Method according to one of Claims 1 to 8, **characterized in that** the information required to check the objects (O1 to O9) located in front of the vehicle is determined by means of a sampling method which senses at least the distance and the direction of reflective objects, and **in that** the objects (O1 to O9) which are determined in this way are selected on the basis of their location and their velocity with respect to the vehicle in order to obtain relevant objects.

12. Method according to one of the preceding claims, **characterized in that** an object (O1 to O9) is selected as a relevant object if the location, the direction and the velocity of the object (O1 to 09) and of the vehicle make a collision appear possible.

13. Method according to one of the preceding claims, **characterized in that** an object (O1 to O9) which is distinguished through its shape and/or colour is selected as relevant.

14. Method according to one of the preceding claims, **characterized in that** information from a plurality of sensors is used to determine relevant objects (O1 to O9).

## Revendications

1. Procédé pour attirer l'attention d'un conducteur d'un véhicule sur des objets (O1 à O9) dans une image qui est enregistrée par une caméra vidéo (1), un contrôle étant effectué sur les objets (O1 à O9) présents dans le champ de vision de la caméra (1) pour vérifier s'ils peuvent s'avérer pertinents pour un mouvement attendu du véhicule, **caractérisé en ce qu'**un espace libre (M3, M4) est mis en valeur dans la représentation pour un mouvement supplémentaire du véhicule lors duquel les objets (O1 à O9) tout d'abord identifiés comme pertinents ne le sont pas.

2. Procédé selon la revendication 1, **caractérisé en ce que** les composantes de l'image qui contiennent les objets (O1 à O9) identifiés comme pertinents sont mises en valeur dans la représentation.

3. Procédé selon la revendication 2, **caractérisé en ce que** les composantes de l'image sont représentées plus claires.

4. Procédé selon la revendication 2, **caractérisé en ce que** les composantes de l'image sont représentées avec des couleurs modifiées.

5. Procédé selon l'une des revendications précédentes, **caractérisé en ce que** les composantes de l'image sont mises en valeur par une surface (M1, M2) englobant à chaque fois au moins un objet (O1 à O9) pertinent.

6. Procédé selon la revendication 1, **caractérisé en ce que** les objets (O1 à O9) qui ne sont pas pertinents pour le mouvement attendu sont également pris en compte lors du calcul de l'espace libre (M3, M4).

7. Procédé selon l'une des revendications 1 ou 6, **caractérisé en ce que** l'espace libre (M3, M4) est représenté par une reproduction accentuée de la voie de circulation.

8. Procédé selon l'une des revendications 1 ou 6, **caractérisé en ce que** l'espace libre (M3, M4) est représenté par des symboles indiquant la direction.

9. Procédé selon l'une des revendications précédentes, **caractérisé en ce que** les informations nécessaires pour le contrôle des objets (01 à O9) qui se trouvent devant le véhicule sont initialement déterminées par une représentation de l'espace et par l'utilisation d'algorithmes de traitement d'image et que les objets (O1 à O9) pertinents parmi les objets (O1 à O9) déterminés sont sélectionnés en se basant sur leur emplacement et leur vitesse par rapport au véhicule.

10. Procédé selon la revendication 9, **caractérisé en ce que** les hypothèses sont vérifiées d'après une hypothèse obtenue par les algorithmes de traitement d'image en comparant avec les objets enregistrés dans une base de données.

11. Procédé selon l'une des revendications 1 à 8, **caractérisé en ce que** les informations nécessaires pour le contrôle des objets (O1 à O9) qui se trouvent devant le véhicule sont déterminées par un procédé de balayage qui détecte au moins la distance et la direction d'objets réfléchissants et que les objets (O1 à O9) ainsi déterminés sont sélectionnés en se basant sur leur emplacement et leur vitesse par rapport au véhicule pour obtenir les objets pertinents.

12. Procédé selon l'une des revendications précédentes, **caractérisé en ce qu'**un objet (O1 à O9) est sélectionné comme objet pertinent lorsque l'emplacement, la direction et la vitesse de l'objet (O1 à O9) et du véhicule amènent à déduire qu'une collision est possible.

13. Procédé selon l'une des revendications précédentes, **caractérisé en ce qu'**un objet (O1 à O9) qui se distingue par sa forme et/ou sa couleur est sélectionné comme étant pertinent.

14. Procédé selon l'une des revendications précédentes, **caractérisé en ce que** les informations de plusieurs capteurs sont utilisées pour déterminer les objets (O1 à O9) pertinents.
